# EUROPÄISCHE PATENTSCHRIFT

(11) **EP 0 526 407 B1**
(45) Veröffentlichungstag und Bekanntmachung des Hinweises auf die Patenterteilung: **15.05.1996**
(21) Anmeldenummer: 92810576.6
(22) Anmeldetag: 28.07.1992
(51) Int. Cl.: A47J 31/40

(54) **Brüheinrichtung für eine Kaffeemaschine**
Brewing unit for a coffee machine
Dispositif d'infusion pour une machine à café

(30) Priorität: 30.07.1991 CH 2285/91
(43) Veröffentlichungstag der Anmeldung: 03.02.1993
(73) Patentinhaber: SINTRA HOLDING AG, CH-6210 Sursee (CH)
(72) Erfinder: Lüssi, André, CH-3084 Wabern (CH); Zurbuchen, Hans, CH-3084 Wabern (CH); von Gunten, Jürg, CH-3506 Grosshöchstetten (CH)
(74) Vertreter: Fischer, Franz Josef

(56) Entgegenhaltungen:
- EP-A- 0 217 198
- WO-A-91/10391
- FR-A- 2 452 905

## Beschreibung

Die vorliegende Erfindung bezieht sich auf eine Brüheinrichtung für eine kaffeemaschine gemäss dem Oberbegriff des Patentanspruches 1.

Das Zubereiten von Kaffee mit Kaffeemaschinen wird nach verschiedenen Verfahren ausgeführt, die sich in zwei Grundtypen unterscheiden lassen. Man unterscheidet einen ersten Verfahrenstyp, bei welchem das heisse Wasser einzig und allein in Folge der Schwerkraft, das in einem Filter befindliche Kaffeepulver durchläuft, von einem zweiten Verfahrenstyp, bei welchem das heisse Wasser unter Druck durch das Kaffeepulver gefördert wird (Espresso- oder Druckbrühverfahren). Die vorliegende Erfindung bezieht sich auf das zuletzt erwähnte Druckbrühverfahren. Zum automatischen Ausführen dieses Verfahrens sind bereits verschiedene Kaffeemaschinen bekannt. Diese weisen üblicherweise einen Brühzylinder mit einer zylindrischen Bohrung auf, welche zum Bilden einer Brühkammer beidseitig mit je einem Kolben abschliessbar ist, wobei der Brühzylinder und die Kolben relativ zueinander in der Brühzylinderachse verschiebbar sind. Jeder der Kolben weist dabei auf seiner der gebildeten Brühkammer zugewandten Stirnfläche ein feinmaschiges Sieb auf. Durch das eine Sieb wird heisses Wasser unter Druck in die Brühkammer gefördert, welches das Kaffeepulver umspült und ausbrüht, wobei der dabei erzeugte Kaffee durch das Sieb des anderen Kolbens abgeführt wird. Die genannten Siebe sind sowohl einer Verschmutzung (Verstopfung) als auch einem Verschleiss unterworfen und müssen nicht nur regelmässig gereinigt, sondern von Zeit zu Zeit auch ausgetauscht werden. In der Herstellung sind sie relativ teuer. Eine solche Kaffeemaschine ist in der FR-A-2 452 905 offenbart.

Es ist die Aufgabe der vorliegenden Erfindung, eine Brüheinrichtung für eine Kaffeemaschine zu schaffen, bei der die obgenannten Nachteile nicht mehr vorhanden sind. Insbesondere geht es darum, die Anzahl der Verschleissteile in einer Brüheinrichtung, zu denen auch die genannten Siebe gehören, zu vermindern.

Die Lösung dieser Aufgabe erfolgt mit einer Brüheinrichtung für eine Kaffeemaschine, die die im kennzeichnenden Teil des Patentanspruches 1 aufgeführten Merkmale aufweist.

Bei mindestens einem der Kolben weist die der Brühkammer zugewandte Stirnfläche kein Sieb mehr auf. Das Zu- oder Wegführen von Flüssigkeit in oder aus der Brühkammer erfolgt über den vorgesehenen kreisringförmigen Spalt. Das Bilden eines solchen Spaltes ist in der Herstellung wesentlich kostengünstiger als das Versehen einer Kolbenstirnfläche mit einem feinmaschigen Sieb. Besonders vorteilhaft ist die Lösung dann, wenn zumindest die Stirnfläche desjenigen Kolbens, bei dem das Wasser unter Druck an die Brühkammer zugeführt wird, und der im weiteren zum Ausstossen des ausgelaugten Kaffeepulvers aus der Brühkammer bestimmt ist, sieblos ausgeführt ist. Durch das Zuführen von Wasser unter Druck an den kreisringförmigen Spalt tritt bei jedem Brühvorgang eine selbstreinigende Wirkung des letzteren auf und beim Abstreifen des üblicherweise zu einem Kuchen gepressten, ausgelaugten und aus der Brühkammer ausgestossenen Kaffeepulvers von der Stirnfläche des genannten Kolbens kann keine Siebverschmutzung hervorgerufen werden.

Bevorzugte Weiterausbildungen der Erfindung sind in den abhängigen Patentansprüchen 2 bis 8 gekennzeichnet.

Zweckmässigerweise weist die Wandung des Brühzylinders zum Zu- und/oder Abführen von Flüssigkeit über die genannten Spalte an und/oder von der Brühkammer etwa rechtwinklig zur Brühzylinderachse verlaufende Durchgangsbohrungen auf, welche in den Brühstellungen der Kolben im Bereiche der Spalte angeordnet sind. Die Durchgangsbohrungen können zum Anschliessen je einer Flüssigkeitsleitung aussen am Brühzylinder je mit einem Anschlussnippel versehen sein.

Eine besonders gleichmässige Durchströmung des Kaffeepulvers in der Brühkammer wird dann erreicht, wenn die Durchgangsbohrung durch die Wandung des Brühzylinders im wesentlichen tangential zur Bohrung des Brühzylinders gerichtet ist. Dadurch trifft das zugeführte Druckwasser nicht rechtwinklig auf die Mantelfläche des entsprechenden, den Spalt bildenden Kolbens auf, sondern durchspült den Spalt unter Vermeidung von starken Wirbeln im wesentlichen schraubengangförmig.

Es ist ebenfalls vorgesehen, die an die Stirnflächen der beiden Kolben angrenzenden Mantelbereiche derart auszubilden, dass je ein kreisringförmiger Spalt zur Wand der Bohrung des Brühzylinders hin gebildet wird. Eine ausgezeichnete selbstreinigende Wirkung der beiden Spalte könnte dann erfolgen, wenn die Zu- bzw. Abfuhr der Flüssigkeit aus der Brühkammer intermittierend vertauscht würde. Dies könnte mit einer jeder Brüheinrichtung üblicherweise zugeordneten Steuervorrichtung und einem Umsteuerventil relativ einfach realisiert werden.

Anhand von Figuren ist die vorliegende Erfindung in der Folge beispielsweise näher beschrieben. Es zeigen
**Fig. 1** einen von der Seite betrachteten teilweisen Längsschnitt durch eine in der Brühstellung dargestellte Brüheinrichtung, bei der die Stirnfläche des einen Kolbens sieblos ausgeführt ist und
**Fig. 2** eine vergrösserte Darstellung des sieblos ausgeführten Kolbenendes im Brühzylinder, wobei gestrichelt eine sieblose Ausführung auch des anderen Kolbens angedeutet ist.

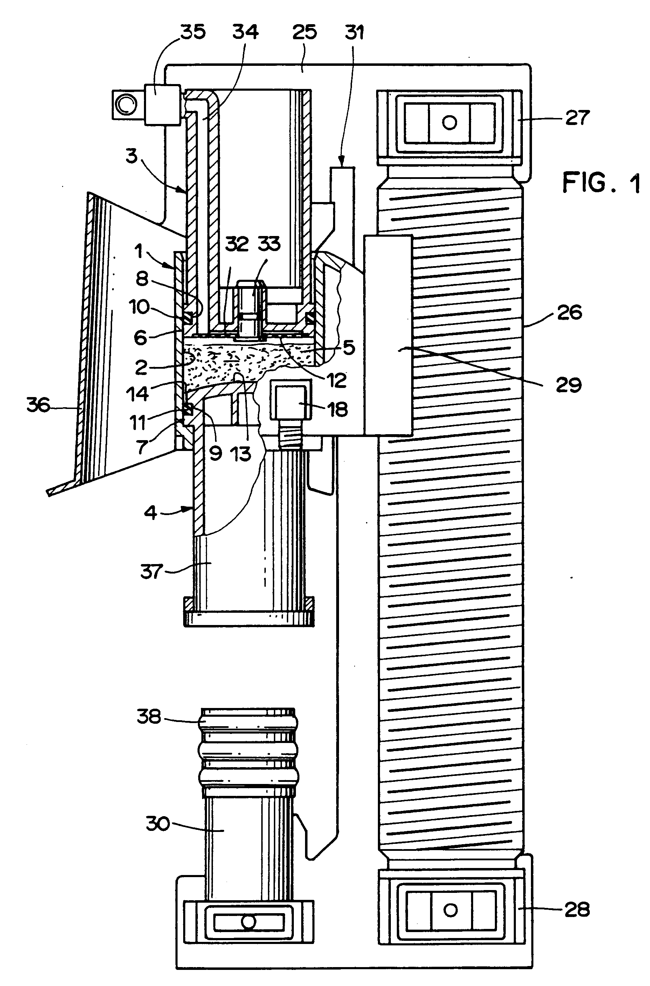

In dem in der Fig. 1 von der Seite betrachteten teilweisen Längsschnitt durch die in der Brühstellung gezeigte Brüheinrichtung ist mit dem Bezugszeichen 1 ein Brühzylinder gekennzeichnet, der eine zylindrische Bohrung 2 aufweist. Ein erster Kolben 3 ist fest zwischen zwei parallelen Seitenwangen der Brüheinrichtung, von denen in der Figur nur die eine 25 sichtbar ist, angeordnet. Der Brühzylinder 1 ist längs einer Antriebsspindel 26, welche zwischen einem ersten Antriebsspindellager 27 und einem zweiten Antriebsspindellager 28 drehbar gelagert ist, verschiebbar angeordnet. Die Antriebsspindel 26 weist ein Spindelgewinde auf, welches mit einem Mitnahmeorgan 29, das sich vom Brühzylinder 1 gegen die Antriebsspindel 26 erstreckt, wirkverbunden ist. Im Brühzylinder 1 ist ein zweiter Kolben 4 verschiebbar gehalten. Der zweite Kolben 4 weist einen in der in der Fig. 1 gezeigten Stellung aus dem Brühzylinder 1 herausragenden hohlzylinderförmigen Schaft 37 auf. Durch diesen Schaft 37 wird einerseits der Verschiebebereich des zweiten Kolbens 4 innerhalb des Brühzylinders 1 begrenzt. Andererseits ist der hohlzylinderförmige Schaft 37 dafür bestimmt, beim Rücksetzen des Brühzylinders 1 von der in der Fig. 1 gezeigten Brühstellung in eine Auswurfstellung beim Auftreffen auf einen Hemmstutzen 30, insbesondere auf sein dem Brühzylinder 1 zugewandtes, mit O-Ringen 38 versehenes Ende die Rücksetzbewegung gegenüber derjenigen des Brühzylinders 1 vorübergehend zu verlangsamen. Dadurch verschiebt sich der zweite Kolben 4 innerhalb des Brühzylinders 1 gegen das inzwischen vom ersten Kolben 3 freigegebene Ende des Brühzylinders 1. Das durch den vorherigen Brühvorgang ausgelaugte Kaffeepulver 5 wird dabei aus dem Brühzylinder 1 ausgestossen und von einer nur angedeuteten Abstreifvorrichtung 31, die veranlasst wird, eine Schwenkbewegung auszuführen, von der Stirnfläche 13 des zweiten Kolbens 4 entfernt.

Der Brühzylinder 1 wird anschliessend aufwärts in eine Ruhe- oder Einfüllstellung bewegt. Er ist bereit, um über einen schwenkbar angeordneten Einfülltrichter 36, der sich dann in einer eingeschwenkten Stellung befindet, neues Kaffeepulver zu erhalten.

In der in der Fig. 1 gezeigten Brühstellung ist innerhalb des Brühzylinders 1 durch den ersten Kolben 3 und durch den zweiten Kolben 4 eine abgeschlossene Brühkammer 5, in der Kaffeepulver eingeschlossen ist, gebildet worden. Zum Abdichten der Brühkammer weist jeder der Kolben 3, 4 auf seiner zylindrischen Mantelfläche 6, 7 je einen Dichtring 10, 11 auf, der je in eine Nut 8, 9 eingelegt ist, welche sich relativ nahe der Stirnfläche 12, 13 des entsprechenden Kolbens 3, 4 befindet. Die Stirnfläche 12 des ersten Kolbens 3 ist in dem in der Fig. 1 gezeigten Ausführungsbeispiel mit einem Sieb 32 versehen. Dieses ist mit einem Befestigungsclip 33 am ersten Kolben 3 befestigt. Kein Sieb weist die der Brühkammer 5 zugewandte Stirnseite 13 des zweiten Kolbens 4 auf. Der zylindrische Bereich der Mantelfläche des zweiten Kolbens 4 zwischen der Stirnfläche 13 und dem zugeordneten Dichtring 11 ist im Durchmesser gegenüber dem Durchmesser der Bohrung 2 des Brühzylinders 1 reduziert. Dadurch wird zwischen der Wand der Bohrung 2 und der Mantelfläche des zweiten Kolbens 4 im genannten Bereich ein kreisringförmiger Spalt 14 gebildet. Ueber einen Anschlussnippel 18 und eine in dieser Figur nicht sichtbare Durchgangsbohrung durch die Wandung des Brühzylinders 1 wird beim Brühvorgang Wasser unter Druck durch den kreisringförmigen Spalt 14 an die Brühkammer 5 zugeführt. Das Wasser durchströmt das in der Brühkammer 5 befindliche Kaffeepulver, brüht es aus und gelangt als Kaffee durch das Sieb 32 des ersten Kolbens 3 und über eine auf der der Brühkammer 5 abgewandten Seite des Siebes 32 angeordnete Flüssigkeitsleitung 34 an einen weiteren Anschlussnippel 35. Durch das Zuführen des heissen Druckwassers an den kreisringförmigen Spalt 14 wird dieser von allfälligen vorgängigen Kaffeepulverrückständen gereinigt. In der Fig. 1 fällt auf, dass die sieblos ausgeführte Stirnfläche 13 des zweiten Kolbens 4 wesentlich einfacher herstellbar ist als die mit dem Sieb 32 und dem Befestigungsclip 33 versehene Stirnfläche 12 des ersten Kolbens 3.

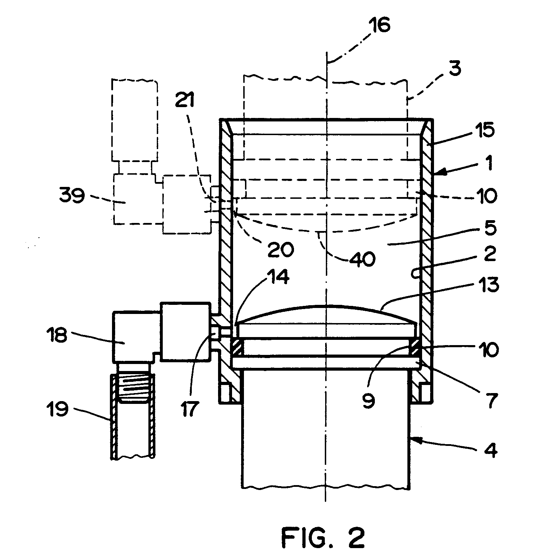

Die Fig. 2 zeigt eine vergrösserte Darstellung des Brühzylinders 1 mit dem sich innerhalb des letzteren befindlichen Ende des zweiten Kolbens 4. Der erste Kolben 3 ist gestrichelt, ebenfalls mit einer sieblosen Ausführung seiner Stirnfläche 40 dargestellt. In der Fig. 2 ist die Brühstellung gezeigt, in welcher durch den Brühzylinder 1 und die beiden Kolben 3, 4 die Brühkammer 5 umschlossen ist. Im Bereiche des kreisringförmigen Spaltes 14 des zweiten Kolbens 4 ist die bereits vorgängig erwähnte Durchgangsbohrung 17, die sich nach aussen des Brühzylinders zu einem Anschlussnippel 18 erstreckt, gezeigt. Die Durchgangsbohrung 17 durchdringt die Wandung 15 des Brühzylinders 1 im wesentlichen rechtwinklig zur Brühzylinderachse 16. Die Durchgangsbohrung 17 kann sowohl radial gegen die Brühzylinderachse gerichtet sein oder kann im wesentlichen tangential zur Mantelfläche 7 des zweiten Kolbens 4 verlaufen. Stellungen dazwischen sind ebenfalls möglich. Bei einem nahezu tangential gerichteten Verlauf der Durchgangsbohrung 17 treten beim Zuführen von Druckwasser praktisch keine Wirbel auf. Der kreisringförmige Spalt 14 wird vom zugeführten Druckwasser in diesem Fall im wesentlichen schraubengangförmig umspült. Eine gleichmässige Durchströmung des sich in der Brühkammer 5 befindlichen Kaffeepulvers und eine vorzügliche Selbstreinigung des kreisringförmigen Spaltes 14 sind dadurch gewährleistet. Der erste Kolben 3 ist lediglich gestrichelt angedeutet. Er ist gleichartig ausgeführt, wie der zweite Kolben 4. Ein weiterer Spalt 20 ist zwischen der Stirnfläche 40 des ersten Kolbens 3 und seinem zugeordneten Dichtring 10 gebildet. Eine zweite mit 21 bezeichnete Durchgangsbohrung erstreckt sich durch die Wandung 15 des Brühzylinders 1. Nach aussen ist die zweite Durchgangsbohrung 21 analog zur Durchgangsbohrung 17 mit einem Anschlussnippel 39 verbunden. Längs der Brühzylinderachse 16 sind die Durchgangsbohrungen 17, 21 so angeordnet, dass sie sich im Bereiche der genannten Spalte 14, 20 befinden, wenn die beiden Kolben 4, 3 in der gezeigten Brühstellung sind.

Die Stirnfläche 13 des zweiten Kolbens 4 ist bombiert ausgeführt. Dies vor allem wegen der in der Fig. 1 nur angedeuteten Abstreifvorrichtung 31, die zum Abstreifen des ausgelaugten Kaffeepulverkuchens ab der genannten Stirnfläche 13 eine kreisbahnförmige Schwenkbewegung ausführt. Bei der in der Fig. 2 gezeigten Ausführung wird durch die Bombierung sowohl der Stirnfläche 13 des zweiten Kolbens 4 als auch der Stirnfläche 40 des ersten Kolbens 3 ein gleichmässigeres Druchströmen des Kaffeepulvers vom unter Druck stehenden heissen Wasser erreicht, als dies bei planen Stirnflächen der Fall wäre. Durch die Bombierung der Stirnflächen 13, 40 kann nämlich zusätzlich der Strömungswiderstand des Druckwassers im Bereiche der Brühzylinderachse 16 vermindert werden.

Wie bereits einleitend erwähnt worden ist, ist es bei der in der Fig. 2 gezeigten Ausführungsform von Vorteil, wenn die Heisswasserzufuhr und die Kaffeeabfuhr über die Anschlussnippel 18, 39 periodisch vertauscht werden. Ein selbstreinigender, über eine grosse Zeitperiode wartungsfreier Betrieb ist auf diese Weise gewährleistet. Das in der Fig. 1 noch gezeigte Sieb 32 ist zusätzlich eliminiert worden. Eine weitere Verminderung der Verschleissteile und eine weitere Vereinfachung der Herstellung ist dadurch erfolgt.

## Patentansprüche

1. Brüheinrichtung für eine Kaffeemaschine, mit einem Brühzylinder (1), der eine zylindrische Bohrung (2) aufweist, mit zwei Kolben (3, 4), durch welche die zylindrische Bohrung (2) zum Bilden einer Brühkammer (5) abschliessbar ist, wobei der Brühzylinder (1) und die Kolben (3, 4) relativ zueinander in der Brühzylinderachse verschiebbar sind und jeder der Kolben (3, 4) auf seiner Mantelfläche (6, 7) eine umlaufende Nut (8, 9) mit einem eingesetzten Dichtring zum Abdichten des jeweiligen Kolbens (3, 4) gegenüber der zylindrischen Bohrung (2) aufweist, wobei die Mantelfläche (7) von mindestens einem der Kolben (4) einen zylindrischen Bereich aufweist, dessen Durchmesser gegenüber dem Durchmesser der zylindrischen Bohrung (2) reduziert ist, wodurch im genannten Bereich ein kreisringförmiger Spalt (14) zwischen dem Kolben (4) und der Bohrung (2) gebildet ist und wobei eine Durchgangsöffnung (17), die zum Führen von Flüssigkeit bestimmt ist, bei geschlossener Brühkammer (5) in den Spalt mündet, dadurch gekennzeichnet, dass der Spalt (14) zwischen der der Brühkammer zugewandten Stirnfläche (13) des Kolbens (4) und dem Dichtring (11) vorhanden und zur Brühkammer hin offen ist, wobei der Spalt zum unmittelbaren Zu- und/oder Wegführen von Flüssigkeit an die und/oder aus der Brühkammer ausserhalb des Kolbens (4) bestimmt ist.

2. Einrichtung nach Anspruch 1, dadurch gekennzeichnet, dass die Durchgangsöffnung (17) durch die Wandung des Brühzylinders (1) ragt und eine im wesentlichen rechtwinklig zur Brühzylinderachse (16) verlaufende Durchgangsbohrung ist.

3. Einrichtung nach Anspruch 2, dadurch gekennzeichnet, dass sich die Durchgangsbohrung (17) auf der der zylindrischen Bohrung (2) abgewandten Seite zu einem Nippel (18) zum Anschliessen einer Leitung (19) erstreckt.

4. Einrichtung nach Anspruch 2 oder 3, dadurch gekennzeichnet, dass bei jedem der Kolben (3, 4) im genannten Bereich ein kreisringförmiger Spalt (14, 20) vorhanden ist und dass jedem der Spalte (14, 20) eine Durchgangsbohrung (17, 21) derart zugeordnet ist, dass sich während dem Brühvorgang jeder der Spalte (14, 20) je im Bereich von einer der Durchgangsbohrungen (17, 21) befindet.

5. Einrichtung nach einem der Ansprüche 2 bis 4, dadurch gekennzeichnet, dass die Durchgangsbohrung (17, 21) radial zur Bohrung (2) des Brühzylinders (1) gerichtet ist.

6. Einrichtung nach einem der Ansprüche 2 bis 4, dadurch gekennzeichnet, dass die Durchgangsbohrung (17, 21) im wesentlichen tangential zur Bohrung (2) des Brühzylinders (1) gerichtet ist.

7. Einrichtung nach einem der Ansprüche 1 bis 6, dadurch gekennzeichnet, dass die Stirnfläche (13, 40) jedes Kolbens (3, 4), bei dem ein kreisringförmiger Spalt (14, 20) vorhanden ist, eine sieblose Oberfläche aufweist.

8. Einrichtung nach einem der Ansprüche 1 bis 7, dadurch gekennzeichnet, dass die der Brühkammer (5) zugewandte Stirnfläche (13, 40) von mindestens einem der Kolben (3, 4) bombiert ausgeführt ist.

## Claims

1. Brewing apparatus for a coffee machine, with a brewing cylinder (1) which has a cylindrical bore (2), with two pistons (3, 4) by means of which the cylindrical bore (2) is closable to form a brewing chamber (5), the brewing cylinder (1) and the pistons (3, 4) being displaceable relative to one another in the brewing cylinder axis, and each of the pistons (3, 4) having on on its outside surface (6, 7) an encircling groove (8, 9) with an inserted gasket (10, 11) for sealing the piston (3, 4) in each case in relation to the cylindrical bore (2), the outside surface (7) of at least one of the pistons (4) having a cylindrical region, the diameter of which is reduced compared to the diameter of the cylindrical bore (2), whereby in the said region an annular gap (14) is formed between the piston (4) and the bore (2), and a through opening (17), intended to convey liquid, opens out into the gap when the brewing chamber (5) is closed, characterized in that the gap (14) is present between the end face (13) of the piston (4) turned toward the brewing chamber and the gasket (11) and is open toward the brewing chamber, the gap being intended for direct feeding and/or discharge of liquid to and/or from the brewing chamber outside the piston (4).

2. Apparatus according to claim 1, characterized in that the through opening (17) extends through the wall of the brewing cylinder (1) and is a through bore running essentially at a right angle to the brewing cylinder axis (16).

3. Apparatus according to claim 2, characterized in that the through bore (17) extends on the side remote from the cylindrical bore (2) to a fitting (18) for connecting a conduit (19).

4. Apparatus according to claim 2 or 3, characterized in that at each of the pistons (3, 4) there is an annular gap (14, 20) in the said region, and that with respect to each of the gaps (14, 20) a through bore (17, 21) is arranged in such a way that during the brewing operation each of the gaps (14, 20) is in each case in the region of one of the through bores (17, 21).

5. Apparatus according to one of the claims 2 to 4, characterized in that the through bore (17, 21) is directed radially to the bore (2) of the brewing cylinder (1).

6. Apparatus according to one of the claims 2 to 4, characterized in that the through bore (17, 21) is directed essentially tangent to the bore (2) of the brewing cylinder (1).

7. Apparatus according to one of the claims 1 to 6, characterized in that the end face (13, 40) of each piston (3, 4) at which there is an annular gap (14, 20) has a surface without a strainer.

8. Apparatus according to one of the claims 1 to 7, characterized in that the end face (13, 40) of at least one of the pistons (3, 4) turned toward the brewing chamber (5) is cambered.

## Revendications

1. Dispositif d'infusion pour une machine à café, avec un cylindre d'infusion (1) présentant une ouverture cylindrique (2), avec deux pistons (3, 4), permettant de fermer l'ouverture cylindrique de manière à former une chambre d'infusion (5), le cylindre d'infusion (1) et les pistons (3, 4) étant mobiles les uns par rapport aux autres dans d'axe du cylindre d'infusion et chacun des pistons (3, 4) présentant sur sa surface extérieure (6, 7) une rainure encerclante (8, 9) dans laquelle est inséré un joint d'étanchéité pour rendre étanche le piston respectif (3, 4) relativement à l'ouverture cylindrique (2), la surface extérieure (7) d'au moins un des pistons (4) présentant une région cylindrique dont le diamètre est réduit par rapport au diamètre de l'ouverture cylindrique (2), un espace annulaire étant ainsi formé dans ladite région entre le piston (4) et l'ouverture (2), et une ouverture traversante (17), prévue pour conduire le liquide, débouchant dans l'espace lorsque la chambre d'infusion est fermée, caractérisé en ce que l'espace (14) se trouve entre la face frontale (13) du piston (4) tournée du côté de la chambre d'infusion et l'anneau d'étanchéité (11) et est ouvert en direction de la chambre d'infusion, l'espace étant destiné à l'amenée directe du liquide à, ou à sa sortie de, la chambre d'infusion en dehors du piston (4).

2. Dispositif selon la revendication 1, caractérisé en ce que l'ouverture traversante (17) s'étend à travers la paroi du cylindre d'infusion (1) et est un trou traversant courant substantiellement à angle droit par rapport à l'axe du cylindre d'infusion.

3. Dispositif selon la revendication 2, caractérisé en ce que le trou traversant (17) s'étend sur le côté éloigné de l'ouverture cylindrique (2) jusqu'à un raccord (18) de connexion à un conduit (19).

4. Dispositif selon la revendication 2 ou la revendication 3, caractérisé en ce que chacun des pistons (3, 4) comprend un espace annulaire (14,20) dans la dite région et qu'un trou traversant (17, 21) est disposé à chacun des espaces (14, 20) (17, 21) de telle manière que pendant le processus d'infusion, chacun des espaces (14, 20) se trouve chaque fois dans la région de l'un des trous traversants (17, 21).

5. Dispositif selon l'une quelconque des revendications 2 à 4, caractérisé en ce que le trou traversant (17, 21) est dirigé radialement par rapport à l'ouverture (2) du cylindre d'infusion (1).

6. Dispositif selon l'une quelconque des revendications 2 à 4, caractérisé en ce que le trou traversant (17, 21) est substantiellement dirigé tangentiellement par rapport à l'ouverture (2) du cylindre d'infusion (1).

7. Dispositif selon l'une quelconque des revendications 1 à 6, caractérisé en ce que la surface frontale (13, 40) de chaque piston (3, 4) sur laquelle se trouve un espace annulaire (14, 20) présente une surface supérieure sans tamis.

8. Dispositif selon l'une des revendications 1 à 7, est caractérisé en ce que la face frontale (13, 40) tournée du côté de la chambre d'infusion (5) d'au moins un des pistons (3, 4) est bombée.
